# EUROPEAN PATENT APPLICATION

(11) **EP 2 468 093 A1**
(43) Date of publication of application: **27.06.2012**
(21) Application number: 11190361.3
(22) Date of filing: 23.11.2011
(51) Int. Cl.: A01N 37/34, A01N 25/22, A01P 1/00

(54) **Stabilized microbicidal composition**

(30) Priority: 27.12.2010 US 427229 P
(71) Applicant: Rohm and Haas Company, Philadelphia, Pennsylvania 19106-2399 (US); Dow Global Technologies LLC, Midland, MI 48674 (US)
(72) Inventor: Koehler, Thomas, Kreuzlingen (CH); Lenoir, Pierre M., Richterswil (CH)
(74) Representative: Buckley, Guy Julian

(57) **Abstract**

A microbicidal composition having at least four components. The first component is 2-25 wt% of 2,2-dibromo-3-nitrilopropionamide. The second component is 2-30 wt% water. The third component is 5-30 wt% of an aliphatic compound having 2-6 hydroxyl groups. The fourth component is 20-70 wt% of a glycol solvent.

## Description

This invention relates to stabilized aqueous microbicidal compositions containing 2,2-dibromo-3-nitrilopropionamide (DBNPA).

An aqueous composition containing DBNPA and glycerin is disclosed in JP 3,287,937. However, this composition contains 65% glycerin. There is a need for additional stabilized aqueous DBNPA compositions, especially those having lower viscosity and/or greater stability.

The problem addressed by this invention is to provide such additional stabilized compositions.

### STATEMENT OF THE INVENTION

The present invention is directed to a microbicidal composition comprising: (a) 2-25 wt% of 2,2-dibromo-3-nitrilopropionamide; (b) 2-30 wt% water; (c) 5-30 wt% of an aliphatic compound having 2-6 hydroxyl groups; and (d) 20-70 wt% of a glycol solvent.

### DETAILED DESCRIPTION OF THE INVENTION

As used herein, the following terms have the designated definitions, unless the context clearly indicates otherwise. The term "microbicide" refers to a compound capable of inhibiting the growth of or controlling the growth of microorganisms at a locus; microbicides include bactericides, fungicides and algaecides. The term "microorganism" includes, for example, fungi (such as yeast and mold), bacteria and algae. The term "locus" refers to an industrial system or product subject to contamination by microorganisms. The following abbreviations are used throughout the specification: ppm = parts per million by weight (weight/weight), mL = milliliter, AI=active ingredient. Percentages of antimicrobial compounds in the composition of this invention are based on the total weight of active ingredients in the composition, i.e., the antimicrobial compounds themselves, exclusive of any amounts of solvents, carriers, dispersants, stabilizers or other materials which may be present. Unless otherwise specified, temperatures are in degrees centigrade (°C), and references to percentages (%) are weight percentages (wt%).

Preferably, the microbicidal composition further comprises 0.1-6 wt% of a mixture of 5-chloro-2-methyl-4-isothiazolin-3-one and 2-methyl-4-isothiazolin-3-one, preferably 0.5-6 wt*%*, preferably 2-6 wt%, preferably 4-5.5 wt%, preferably 0.7-5 wt%, preferably 0.7-2 wt%, preferably 0.9-3 wt%, preferably 0.9-1.6 wt%. "MI" is 2-methyl-4-isothiazolin-3-one, also referred to by the name 2-methyl-3-isothiazolone. "CMI" is 5-chloro-2-methyl-4-isothiazolin-3-one, also referred to by the name 5-chloro-2-methyl-3-isothiazolone. Preferably, the weight ratio of CMI to MI is at least 1:1, alternatively at least 2:1. Preferably, the weight ratio of CMI to MI is no greater than 4:1. Preferably, the CMI:MI ratio is about 3:1. Preferably, the source of the CMI/MI mixture is a substantially salt-free formulation. "Substantially salt-free" means that the composition contains no more than 0.5%, preferably no more than 0.1%, preferably no more than 0.05%, of metal salts, based on weight of the composition. Preferably, the microbicidal composition of this invention contains no more than 0.1%, preferably no more than 0.05%, preferably no more than 0.01% of metal salts. Preferably, the composition comprising DBNPA and CMI/MI contains 12-20% DBNPA, 0.2-3% CMI/MI mixture, 10-27% of an aliphatic compound having 3-6 hydroxyl groups (preferably glycerin), 30-60% glycol solvent and 7-20% water. Preferably, the composition comprising DBNPA and CMI/MI contains 8-15% DBNPA, 3-7*%* CMI/MI mixture, 5-30% of an aliphatic compound having 3-6 hydroxyl groups (preferably glycerin), 10-35% glycol solvent and 20-55% water. Preferably, the composition comprising DBNPA and CMI/MI contains 2-10% DBNPA, 0.9-3% CMI/MI mixture, 10-27% of an aliphatic compound having 3-6 hydroxyl groups (preferably glycerin), 35-65% glycol solvent and 7-20% water.

Preferably, the microbicidal composition further comprises 1-20 wt% of 2-bromo-2-nitro-1,3-propanediol (BNPD), preferably at least 2%, preferably at least 3%, preferably at least 4%, preferably at least 5%, preferably at least 7%; preferably no more than 15%, preferably no more than 12%, preferably no more than 10%, preferably no more than 8%, preferably no more than 7%.

Preferably, the composition contains at least 4% DBNPA, preferably at least 6%, preferably at least 8%, preferably at least 10%, preferably at least 12%, preferably no more than 22%, preferably no more than 20%, preferably no more than 18%, preferably no more than 17%.

Preferably, the composition contains at least 3% water, preferably at least 5%, preferably at least 7%, preferably at least 8%, preferably at least 9%. Preferably, the amount of water is no more than 27%, preferably no more than 25%, preferably no more than 20%, preferably no more than 18%, preferably no more than 16%, preferably no more than 14%, preferably no more than 12%.

Preferably, an aliphatic compound having 2-6 hydroxyl groups is limited to an aliphatic compound having three to eight carbon atoms, preferably to a compound having 3-6 hydroxyl groups and three to six carbon atoms. Preferably, aliphatic compounds having 2-6 hydroxyl groups are selected from the group consisting of glyceraldehyde, dihydroxyacetone, glycerin, and monosaccharides (including reduced monosaccharides, e.g., sorbitol). Preferably, a compound having 3-6 hydroxyl groups and three to six carbon atoms is selected from the group consisting of glycerin, sorbitol, mannitol, xylitol, erythritol and threitol. Preferably, the composition contains at least 10% of an aliphatic compound having 2-6 hydroxyl groups, preferably at least 12%, preferably at least 14%, preferably at least 16%. Preferably, the amount of an aliphatic compound having 2-6 hydroxyl groups is no more than 27%, preferably no more than 25%, preferably no more than 23%, preferably no more than 21%.

Preferably, the composition contains at least 25% glycol solvent, preferably at least 30%, preferably at least 32%, preferably at least 34% preferably at least 36%. Preferably, the amount of glycol solvent is no more than 65%, preferably no more than 60%, preferably no more than 57%, preferably no more than 55%, preferably no more than 52%, preferably no more than 50%, preferably no more than 48%, preferably no more than 46%, preferably no more than 44%. A glycol solvent has the structure R¹-O-Zₙ-R², wherein n is from one to six, R¹ and R² independently are hydrogen or C₁-C₄ alkyl, and if n=1, then at least one of R¹ and R² is not hydrogen, and -Z- is -CH(R³)-CH(R⁴)-O-, wherein within each Z unit, R³ and R⁴ independently are hydrogen or methyl, R¹ and R² independently are not both methyl, and wherein the ratio of the weight of all the Z units in the glycol solvent in which both R³ and R⁴ are hydrogen to the weight of all the Z units in which one of R³ and R⁴ is methyl is no more than 0.66:1. Preferably, R¹ and R² independently are hydrogen or methyl. Preferably, n is from one to four. Preferred glycol solvents include triethylene glycol, tetraethylene glycol, dipropylene glycol, triethylene glycol monobutyl ether and polyethylene glycol with Mₙ from 200-300.

The increased stability of DBNPA in some glycol solvents on addition of an aliphatic compound having 2-6 hydroxyl groups may be more difficult to observe due to the inherently greater stability of DBNPA in those glycol solvents.

Preferably, the composition comprises DBNPA, BNPD and a CMI/MI mixture. Preferably, the composition comprises 12-22% DBNPA, 4-12% BNPD and 0.2-3% of a CMI/MI mixture. Preferably, the glycol solvent is tetraethylene glycol, dipropylene glycol or triethylene glycol; preferably the amount of glycol solvent is from 30-50%. Preferably, the water content is no more than 20%, preferably no more than 18%, preferably no more than 16%, preferably no more than 14%. Preferably, the water content is at least 7%, preferably at least 8%. Preferably, the amount of an aliphatic compound having 3-6 hydroxyl groups is from 10-27%.

Preferably, the composition comprises 3-10% DBNPA, 7-18% BNPD and 0.2-3% of a CMI/MI mixture. Preferably, the glycol solvent is tetraethylene glycol, dipropylene glycol or triethylene glycol; preferably the amount of glycol solvent is from 35-55%. Preferably, the water content is no more than 20%, preferably no more than 18%, preferably no more than 16%, preferably no more than 14%. Preferably, the water content is at least 5%, preferably at least 7%, preferably at least 8%. Preferably, the amount of an aliphatic compound having 3-6 hydroxyl groups is from 10-30%.

The microbicidal compositions of the present invention can be used to inhibit the growth of microorganisms or higher forms of aquatic life (such as protozoans, invertebrates, bryozoans, dinoflagellates, crustaceans, mollusks, etc) by introducing a microbicidally effective amount of the compositions onto, into, or at a locus subject to microbial attack. Suitable loci include, for example: industrial process water; electrocoat deposition systems,; cooling towers; air washers; gas scrubbers; mineral slurries; wastewater treatment; ornamental fountains; reverse osmosis filtration; ultrafiltration; ballast water; evaporative condensers; heat exchangers; pulp and paper processing fluids and additives; starch; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; food, beverage, and industrial process pasteurizers; toilet bowls; recreational water; pools; and spas.

The compositions described herein can incorporate other known biocidal active ingredients in addition to those listed herein.

### EXAMPLES

### Formulations having 20% DBNPA, 6% BNPD and 1.25% CMI/MI (3:1):

These formulations were prepared from salt-free CMI/MI biocide, except as otherwise indicated. They were placed in an oven at 40°C and analyzed for loss of the biocides after 60 days.

| Glycerin % | Water % | TEG-monobutyl ether % | TEG % | DBNPA loss, % | BNPD loss, % | MI/CMI loss, % |
|---|---|---|---|---|---|---|
| Blank DBNPA | | | | 71 | | |
| 0 | 10 | - | 59.5 | 11 | 3 | 13 |
| 0 | 20 | - | 49.5 | 10 | 1 | 5 |
| 0 | 30 | - | 39.5 | 16 | 3 | 10 |
| 10 | 10 | - | 49.5 | 6 | 3 | 5 |
| 10 | 20 | - | 39.5 | 12 | 3 | 9 |
| 10 | 30 | - | 29.5 | * | * | * |
| 20 | 10 | - | 39.5 | 5 | 3 | 4 |
| 20 | 20 | - | 29.5 | 14 | 4 | 16 |
| 20 | 30 | - | 19.5 | * | * | * |
| 0 | 10 | 59.5 | - | 40 | 0 | 33 |
| 0 | 20 | 49.5 | - | 18 | 0 | 9 |
| 0 | 30 | 39.5 | - | 18 | 3 | 9 |
| 10 | 10 | 49.5 | - | 15 | 3 | 12 |
| 10 | 20 | 39.5 | - | 14 | 3 | 9 |
| 10 | 30 | 29.5 | - | 18 | 4 | 17 |
| 20 | 10 | 39.5 | - | 11 | 3 | 9 |
| 20 | 20 | 29.5 | - | * | * | * |
| 20 | 30 | 19.5 | - | * | * | * |

| | | | | | | |
|---|---|---|---|---|---|---|
| * two-phase system formed, stability not determined TEG=triethylene glycol | | | | | | |

### Formulations having 20% DBNPA, without BNPD or CMI/MI:

These were prepared and placed in an oven at 45°C and analyzed for loss of the biocides after 28 days. TetEG=tetraethylene glycol.

| Glycerin, % | Water, % | TEG | DPG | TetEG | DBNPA loss, % |
|---|---|---|---|---|---|
| 0 | 20 | 60 | - | - | 13 |
| 7.5 | 7.5 | 65 | - | - | 12 |
| 10 | 5 | 65 | - | - | 11 |
| 15 | 5 | 60 | - | - | 12 |
| 20 | 5 | 55 | - | - | 11 |
| 15 | 10 | 55 | - | - | 13 |
| 10 | 15 | 55 | - | - | 15 |
| 15 | 15 | 50 | - | - | 11 |
| 20 | 15 | 45 | - | - | 13 |
| 15 | 20 | 45 | - | - | 13 |
| 20 | 10 | 50 | - | - | 12 |
| 65 | 15¹ | 10 | - | - | 98 |
| 30 | 15 | 35 | - | - | 4 |
| 20 | 10 | - | - | 50 | 9 |
| 15 | 20 | - | - | 45 | 5 |
| 20 | 10 | - | 50 | - | 12 |
| 15 | 20 | - | 45 | - | 6 |
| sorbitol, % | water, % | | | | |
| 20 | 10 | - | - | 50² | - |
| 15 | 20 | - | - | 45 | 8 |
| 15 | 15 | - | - | 50 | 5 |

| | | | | | |
|---|---|---|---|---|---|
| 1 10% DBNPA- 20% not soluble 2 insoluble - stability not tested | | | | | |

### Formulations having 20% DBNPA and 0.25% CMI/MI (3:1):

These formulations were prepared, using salt-free CMI/MI and placed in an oven at 45°C and analyzed for loss of the biocides after 28 days.

| Glycerin, % | Water, % | TetEG | DPG | TEG | DBNPA loss, % | CMI/MI loss, % |
|---|---|---|---|---|---|---|
| 30 | 20 | - | 29 | - | 4 | 3 |
| 30 | 15 | - | 34 | - | 3.5 | 2 |
| 30 | 10 | - | 39 | - | 4 | 3 |
| 30 | 5 | - | 44 | - | 6 | 0 |
| 20 | 10 | - | 49 | - | 3.5 | 2 |
| 10 | 10 | - | 59 | - | 7 | 6.5 |
| 10 | 5 | - | 64 | - | 27¹ | 17¹ |
| 0 | 20 | - | 59 | - | 10 | 8 |
| 30 | 20 | 29 | - | - | 3.5 | 1 |
| 30 | 15 | 34 | - | - | 3 | 2.5 |
| 30 | 10 | 39 | - | - | 2.5 | 2 |
| 30 | 5 | 44 | - | - | 6 | 2.5 |
| 20 | 10 | 49 | - | - | 3.5 | 2.5 |
| 10 | 10 | 59 | - | - | 3.5 | 2.5 |
| 10 | 5 | 64 | - | - | 2.5 | 5 |
| 0 | 20 | 59 | - | - | 4 | 5 |
| 20 | 10 | - | - | 49 | 6 | 5² |
| 0 | 20 | - | - | 59 | 13 | 8² |

| | | | | | | |
|---|---|---|---|---|---|---|
| 1 These results do not fit the overall pattern and are believed to be erroneous 2 These samples had 1% CMI/MI | | | | | | |

### Formulations having 20% DBNPA and 6% BNPD:

These formulations were prepared and placed in an oven at 45°C and analyzed for loss of the biocides after 28 days.

| Glycerin, % | Water, % | TetEG | DPG | TEG | DBNPA loss, % | BNPD loss, % |
|---|---|---|---|---|---|---|
| 30 | 20 | - | 24 | - | * | * |
| 30 | 15 | - | 29 | - | 14¹ | 12.5¹ |
| 30 | 10 | - | 34 | - | 3 | 1 |
| 30 | 5 | - | 39 | - | 2 | 1.5 |
| 20 | 10 | - | 44 | - | 3 | 1.5 |
| 10 | 10 | - | 54 | - | 6 | 0.5 |
| 10 | 5 | - | 60 | - | 7 | 1 |
| 0 | 20 | - | 54 | - | 3.5 | 1.5 |
| 30 | 20 | 24 | - | - | * | * |
| 30 | 15 | 29 | - | - | 4.5 | 3.5 |
| 30 | 10 | 34 | - | - | 3 | 2 |
| 30 | 5 | 39 | - | - | 2.5 | 1.5 |
| 20 | 10 | 44 | - | - | 7 | 3 |
| 10 | 10 | 54 | - | - | 7 | 8.5 |
| 10 | 5 | 60 | - | - | 5 | 6 |
| 0 | 20 | 54 | - | - | 2 | 0 |
| 20 | 10 | - | - | 44 | 7 | 4 |
| 0 | 20 | - | - | 54 | 13 | 7 |

| | | | | | | |
|---|---|---|---|---|---|---|
| * insoluble - stability not measured 1 These results do not fit the overall pattern and are believed to be erroneous | | | | | | |

### Formulations having 10-20% DBNPA, without BNPD or CMI/MI:

These were prepared and placed in an oven at 45°C and analyzed for loss of the biocides after 28 days. DEGMME=diethylene glycol monomethyl ether.

| Glycerin, % | Water, % | TEG | DEGMME | TetEG | DPG | DBNPA loss, % |
|---|---|---|---|---|---|---|
| 65 | 15 | 10 | - | - | - | 3¹ |
| 65 | 15 | - | 10 | - | - | 95¹ |
| 65 | 15 | - | - | - | - | -¹ |
| 65 | 25 | - | - | - | - | -¹ |
| 65 | 15 | - | - | 10 | - | 95¹ |
| 65 | 15 | - | - | - | 10 | 4¹ |
| 45 | 5 | 30 | - | - | - | 3 |
| 45 | 15 | 20 | - | - | - | - |
| 45 | 25 | 20 | - | - | - | 9¹ |
| 45 | 30 | 5 | - | - | - | - |
| 45 | 40 | 5 | - | - | - | -¹ |
| 30 | 5 | 45 | - | - | - | 3 |
| 30 | 30 | 20 | - | - | - | - |
| 30 | 40 | 20 | - | - | - | -¹ |
| 0 | 30 | 50 | - | - | - | 8 |
| 0 | 20 | 60 | | | | 13 |

| | | | | | | |
|---|---|---|---|---|---|---|
| 1 Sample contained only 10% DBNPA- 20% not soluble All samples whose stability was not tested had phase separation | | | | | | |

## Claims

1. A microbicidal composition comprising:
(a) 2-25 wt% of 2,2-dibromo-3-nitrilopropionamide;
(b) 2-30 wt% water;
(c) 5-30 wt% of an aliphatic compound having 2-6 hydroxyl groups; and
(d) 20-70 wt% of a glycol solvent.

2. The composition of claim 1 in which the aliphatic compound having 2-6 hydroxyl groups is limited to an aliphatic compound having 3-6 hydroxyl groups and three to six carbon atoms.

3. The composition of claim 2 further comprising 0.1-6 wt% of a mixture of 5-chloro-2-methyl-4-isothiazolin-3-one and 2-methyl-4-isothiazolin-3-one.

4. The composition of claim 3 comprising 7-25 wt% water and 8-22 wt% of 2,2-dibromo-3-nitrilopropionamide.

5. The composition of claim 4 in which a weight ratio of 5-chloro-2-methyl-4-isothiazolin-3-one to 2-methyl-4-isothiazolin-3-one is from 4:1 1 to 1:1.

6. The composition of claim 2 further comprising 1-20 wt% of 2-bromo-2-nitro-1,3-propanediol.

7. The composition of claim 6 comprising 5-18 wt% water.

8. The composition of claim 2 further comprising 4-12 wt% of 2-bromo-2-nitro-1,3-propanediol and 0.2-2 wt% of a mixture of 5-chloro-2-methyl-4-isothiazolin-3-one and 2-methyl-4-isothiazolin-3-one; wherein a weight ratio of 5-chloro-2-methyl-4-isothiazolin-3-one to 2-methyl-4-isothiazolin-3-one is from 4:1 1 to 1:1.

9. The method of claim 8 comprising 7-25 wt% water and 8-22 wt% of 2,2-dibromo-3-nitrilopropionamide.

10. The method of claim 9 in which the glycol solvent comprises at least one glycol solvent selected from the group consisting of triethylene glycol, tetraethylene glycol and triethylene glycol monobutyl ether.
